(19) Europäisches Patentamt
European Patent Office
Office européen des brevets

(11) **EP 3 581 396 B1**

(12) **EUROPÄISCHE PATENTSCHRIFT**

(45) Veröffentlichungstag und Bekanntmachung des Hinweises auf die Patenterteilung:
**11.05.2022   Patentblatt 2022/19**

(21) Anmeldenummer: **19184197.2**

(22) Anmeldetag: **22.10.2008**

(51) Internationale Patentklassifikation (IPC):
*B42D 25/00* (2014.01)       *G06K 19/07* (2006.01)
*G06T 1/00* (2006.01)        *G06K 19/077* (2006.01)
*G06K 19/14* (2006.01)       *G07D 7/1205* (2016.01)
*G08G 1/017* (2006.01)

(52) Gemeinsame Patentklassifikation (CPC):
**B42D 25/00; G06K 19/0723; G06K 19/07703; G06K 19/14; G07D 7/1205;** B42D 2033/44; G08G 1/017

(54) **DOKUMENT MIT EINER INTEGRIERTEN ANZEIGEVORRICHTUNG**

DOCUMENT WITH INTEGRATED DISPLAY DEVICE

DOCUMENT DOTÉ D'UN DISPOSITIF D'AFFICHAGE INTÉGRÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.11.2007   DE 102007000883**

(43) Veröffentlichungstag der Anmeldung:
**18.12.2019   Patentblatt 2019/51**

(62) Dokumentnummer(n) der früheren Anmeldung(en) nach Art. 76 EPÜ:
**08848866.3 / 2 219 877**

(73) Patentinhaber: **Bundesdruckerei GmbH 10969 Berlin (DE)**

(72) Erfinder:
• **FISCHER, Jörg**
  **13053 Berlin (DE)**
• **PAESCHKE, Manfred**
  **16348 Wandlitz (DE)**
• **PFLUGHOEFFT, Malte**
  **13347 Berlin (DE)**
• **MUTH, Oliver**
  **12277 Berlin (DE)**

(74) Vertreter: **Richardt Patentanwälte PartG mbB Wilhelmstraße 7 65185 Wiesbaden (DE)**

(56) Entgegenhaltungen:
US-A1- 2006 115 110       US-A1- 2006 152 524
US-A1- 2007 008 084

**Beschreibung**

Die vorliegende Erfindung betrifft ein Dokument mit einer integrierten Anzeigevorrichtung, insbesondere ein Wert- oder Sicherheitsdokument, ein Lesegerät sowie ein Verfahren zur Verifikation eines Dokuments.

Dokumente mit einer integrierten elektronischen Schaltung sind aus dem Stand der Technik an sich in verschiedener Form bekannt. Beispielsweise gibt es Wert- und Sicherheitsdokumente in überwiegend papierbasierter Form, wie zum Beispiel als Banknote, als elektronischen Reisepass, oder als kunststoffbasierte Chipkarte, insbesondere als sogenannte Smart Card, in kontaktbehafteter, kontaktloser oder Dual-Interface Ausführung. Hierzu wird insbesondere auf die DE 10 2005 025 806 verwiesen.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät, Leseeinrichtung oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem kontaktlosen, beispielsweise einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Des Weiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und /oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente können eine integrierte Anzeigevorrichtung aufweisen, wie es z.B. aus DE 10 2005 030 626 A1, DE 10 2005 030 627 A1, DE 10 2005 030 628 A1, WO 2004/080100 A1, EP 1 023 692 B1, DE 102 15 398 B4, EP 1 173 825 B1, EP 1 230 617 B1, EP 1 303 835 B1, EP 1 537 528 B1, WO 03/030096 A1, EP 0 920 675 B1, US 6,019,284, US 6,402,039 B1, WO 99/38117 bekannt ist.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren sind zum Beispiel in der Norm ISO 7816, ISO 14443, ISO 15763 festgelegt.

Ein Nachteil solcher Dokumente mit RFID-Funktionalität ist, dass ohne Einverständnis des Trägers des Dokuments die RFID-Schnittstelle angesprochen werden kann. Ein Schutzmechanismus für Reisedokumente zum Schutz gegen unbefugtes Auslesen der Daten aus einem solchen Dokument ist als "Basic Access Control" bekannt, vgl. hierzu "Machine Readable Travel Document", Technical Report, PKI for Machine Readable Travel Documents Offering ICC Read-Only Access, Version 1.1, Oktober 01, 2004, International Civil Aviation Organisation (ICAO). Ein Verfahren für den besonderen Schutz biometrischer Daten, d.h. die sog. Extended Access Control, ist beispielsweise aus der oben bereits genannten DE 10 2005 O25 806 bekannt.

Aus der zum Anmeldezeitpunkt unveröffentlichten Patentanmeldung DE 10 2006 031 422.0-53 derselben Anmelderin ist ein Wert- oder Sicherheitsdokument mit einer Anzeigevorrichtung zur Ausgabe eines maschinenlesbaren optischen Signals, welches durch einen Benutzer nicht kognitiv erfassbar ist, bekannt.

Aus WO 2007/137555 A2 ist ein elektronisch konfigurierbares Kraftfahrzeug-Kennzeichen mit einem Display bekannt. Um das Kraftfahrzeug-Kennzeichen zu konfigurieren, werden Daten in einer externen Konfigurationseinheit zusammengestellt und verschlüsselt. Die verschlüsselten Daten werden von einem in die Konfigurationseinheit integrierten Infrarot-Sender als Infrarot-Signale ausgesendet. In der Anzeigeelektronik für das Kraftfahrzeug-Kennzeichen werden die Signale entschlüsselt, wofür eine entsprechende Entschlüsselungs-Software in der Anzeigeelektronik gespeichert ist. Weitere elektronische Kraftfahrzeug-Kennzeichen sind bekannt aus US 5,657,008 und US 2007/0285361 A1.

Aus der US 2006 / 0 115 110 A1 sind Identifikations- und Sicherheitsdokumente sowie Verfahren und Systeme zu deren Authentifizierung bekannt. Das Dokument weist auf einer ersten Oberfläche einen ersten Satz von Druckstrukturen und einen zweiten Satz von Druckstrukturen auf. Der erste Satz von Druckstrukturen und der zweite Satz von Druckstrukturen wirken zusammen, um die Position des zweiten Satzes von Druckstrukturen zu verschleiern. Der zweite Satz von Druckstrukturen kann derart auf der ersten Oberfläche angeordnet sein, dass ein Reflexionsmuster oder ein Beugungsgitter erzeugt wird. Der zweite Satz von Druckstrukturen wird vorzugsweise mit Metallic-Tinte angelegt. Außerdem wird ein Finanzinstrument oder ein Ausweisdokument mit einer organischen Leuchtdiode (OLED)-Array dargestellt. Das OLED-Array dient der Anzeige von Informationen, die vorzugsweise mit den Informationen auf oder in dem Finanzinstrument oder Ausweisdokument korreliert sind.

Aus der US 2006 / 0 152 524 A1 ist ein Farbanzeigesystem mit einer Anzeigevorrichtung für vier oder mehr sichtbare Primärfarben und einem Prozessor zu dessen Ansteuerung derart, dass in ausgewählten Bereichen eines angezeigten Bildes oder einer angezeigten Bildfolge visuell äquivalente Farben sich in ihrer spektralen Zusammensetzung unterscheiden. Des Weiteren offenbart die US 2007 / 0 008 084 A1 ein elektronisches Kennzeichensystem, das als Anzeigevorrichtung zur Darstellung veränderlicher Informationen ausgebildet ist, Informationen gemäß zufälligen Anweisungen eines Verkehrskontrollsystems anzeigt und bei Installation in einem Kraftfahrzeug als beleuchtetes Kennzeichen zur einfachen visuellen Identifizierung dient. Der angezeigte Inhalt des Nummernschildes variiert je nach Zeit und Ort, um Fälschungen oder eine Abschaltung zu verhindern, und aufgrund des beleuchteten Nummernschildes kann die Aufmerksamkeit und Verkehrssicherheit in Bereichen mit schlechter Sicht erhöht werden. Das mit dem Verkehrskontrollsystem zusammenarbeitende elektronische Kennzeichen kann Funktionen wie automatische Gebührenzahlung, automatisierte Verkehrskontrolle sowie automatische Ermittlung von dynamischen geografischen Informationen, Straßennutzungsinformationen und Verkehrsstatistiken unterstützen und ein intelligentes Verkehrssystem (ITS) zur Verhinderung von Kennzeichenfälschung und Fahrzeugdiebstahl bereitstellen.

Der Erfindung liegt dem gegenüber die Aufgabe zu Grunde, ein verbessertes Dokument, ein Lesegerät für ein Dokument und ein Verfahren zur Verifikation eines Dokuments zu schaffen.

Die der Erfindung zu Grunde liegenden Aufgaben werden jeweils mit den Merkmalen der unabhängigen Patentansprüche gelöst. Ausführungsformen der Erfindung sind in den abhängigen Patentansprüchen angegeben.

Ausführungsformen eines erfindungsgemäßen Dokuments beinhalten eine integrierte Anzeigevorrichtung, die Bildelemente für eine farbige Wiedergabe aufweist. Zumindest eine erste Teilmenge der Bildelemente ist zur Abstrahlung von Licht einer ersten spektralen Zusammensetzung zur Erzeugung einer bestimmten Farbwahrnehmung ausgebildet. Zumindest eine zweite Teilmenge der Bildelemente ist zur Abstrahlung von Licht einer zweiten spektralen Zusammensetzung zur Erzeugung derselben Farbwahrnehmung ausgebildet.

Dabei geht die Erfindung von der Erkenntnis aus, dass dieselbe Farbwahrnehmung bei einem Benutzer durch Überlagerung unterschiedlicher spektraler Komponenten erzeugt werden kann. Die ersten und zweiten spektralen Zusammensetzungen können innerhalb gewisser Bereiche variiert werden, ohne dass sich die subjektive Farbwahrnehmung des Benutzers ändert.

Wenn von bestimmten Bildelementen der Anzeigevorrichtung Licht abgestrahlt werden soll, um eine bestimmte subjektive Farbwahrnehmung bei einem Benutzer zu erzeugen, kann dies also durch Licht einer ersten spektralen Zusammensetzung oder durch Licht einer zweiten spektralen Zusammensetzung erfolgen. Durch die Auswahl der ersten oder der zweiten spektralen Zusammensetzung wird durch die Anzeigevorrichtung zusätzlich zu der Bildwiedergabe eine Information ausgegeben, die durch den Benutzer visuell nicht wahrnehmbar ist, aber durch ein Lesegerät maschinell erfassbar ist.

Nach einer Ausführungsform der Erfindung wird die erste spektrale Zusammensetzung durch Überlagerung von Strahlungskomponenten zumindest erster, zweiter und dritter Grundfrequenzen und ersten, zweiten und dritten spektralen Verläufen gebildet, und die zweite spektrale Zusammensetzung durch Überlagerung von Strahlungskomponenten zumindest vierter, fünfter und sechster Grundfrequenzen und vierten, fünften und sechsten spektralen Verläufen. Zumindest eine der vierten, fünften und sechsten spektralen Verläufe ist mit keinem der ersten, zweiten und dritten spektralen Verläufe identisch.

Unter "spektralem Verlauf" wird hier die Form eines Spektrums verstanden, unabhängig von der Grundfrequenz des Spektrums. Der ersten und zweiten Teilmengen der Bildelemente können sich also hinsichtlich zumindest einer Grundfrequenz und/oder zumindest eines der spektralen Verläufe voneinander unterscheiden.

Nach einer Ausführungsform der Erfindung ist die Information durch die räumliche Anordnung der Bildelemente der ersten und zweiten Teilmengen fest vorgegeben. Beispielsweise wird durch die Anordnung der Bildelemente der ersten und zweiten Teilmengen ein Muster gebildet, welches aufgrund der Abstrahlung des Lichts entweder der ersten spektralen Zusammensetzung oder der zweiten spektralen Zusammensetzung von einem Lesegerät detektierbar ist.

Nach einer nicht beanspruchten Ausführungsform sind die Bildelemente der ersten und zweiten Teilmengen gleich aufgebaut, wobei jedes der Bildelemente Licht abstrahlen kann, welches sich durch Überlagerung von Strahlungskomponenten zumindest erster, zweiter, dritter und vierter Grundfrequenzen ergibt. Durch geeignete Ansteuerung der Bildelemente kann die jeweilige spektrale Zusammensetzung zur Erzeugung derselben Farbwahrnehmung örtlich und/oder zeitlich variiert werden, um eine gewünschte Information auszugeben.

Ausführungsformen der Erfindung sind besonders vorteilhaft, da eine Nachstellung des Dokuments durch einen Fälscher erheblich erschwert wird. Zunächst erhält der Fälscher keine Kenntnis von der Tatsache, dass die Bildelemente der Anzeigevorrichtung zur Erzeugung derselben subjektiven Farbwahrnehmung unterschiedliche Spektren abstrahlen. Ferner kann sich diese Abstrahlung unterschiedlicher Spektren zur Erzeugung derselben subjektiven Farbwahrnehmung nur auf einen Teilbereich des Dokuments beziehen, wodurch eine Nachstellung des Dokuments weiter erschwert wird, da ein Fälscher auch nicht wissen kann, auf welchen Teilbereich des Dokuments sich diese Ausgestaltung erstreckt.

Nach einer Ausführungsform der Erfindung handelt es sich bei der in das Dokument integrierten Anzeigevorrichtung um ein Aktiv- oder Passiv-Matrixdisplay oder eine Segment-Anzeige.

Insbesondere kann es sich bei der Anzeigevorrichtung um eine elektrophoretische oder elektrochrome Anzeige, eine bistabile Anzeige, eine Drehelementanzeige, insbesondere sog. elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Anzeige auf Basis interferometrischer Modulatorelemente (IMOD), eine Hybridanzeige oder eine Anzeige auf Basis eines flexiblen Displays, wie sie beispielsweise von der Firma Citala (www.citala.com) kommerziell erhältlich ist (vergleiche US 2006/0250535 A1 und WO 2007/054944), handeln.

Nach einer Ausführungsform der Erfindung handelt es sich bei der Anzeigevorrichtung um ein LCD-Display, bei dem die verschiedenen spektralen Zusammensetzungen durch unterschiedliche Farbfilter realisiert sind. Insbesondere kann das LCD-Display so ausgebildet sein, dass jedes Bildelement durch vier oder mehr Anzeigeelemente realisiert ist.

Nach einer Ausführungsform der Erfindung handelt es sich bei der Anzeigevorrichtung um ein elektrophoretisches Display. Das elektrophoretische Display hat Kavitäten oder Kapseln, insbesondere Mikrokapseln, in denen sich elektrophoretische Partikel befinden. Beispielsweise sind die Kavitäten oder Kapseln mit einer farbigen Flüssigkeit gefüllt, in dem die Partikel beweglich sind. Durch die Wahl der Farbe der Flüssigkeit lässt sich die spektrale Zusammensetzung festlegen. Alternativ können die Kavitäten unterschiedlich eingefärbte Partikel jeweils entgegengesetzter Ladung beinhalten. Durch die Wahl der Einfärbung der Partikel wird hier die spektrale Zusammensetzung bestimmt. Alternativ kann das elektrophoretische Display als Schwarzweißanzeige mit aufgebrachten Farbfiltern aufgebaut sein. Mit Hilfe geeigneter Farbfilter lassen sich die gewünschten Farben durch additive Farbmischung darstellen.

Nach einer weiteren Ausführungsform der Erfindung ist die Anzeigevorrichtung als elektrochromes Display ausgebildet. Durch die Auswahl diverser Materialien lassen sich spannungsabhängige Farben realisieren, um die gewünschten Strahlungskomponenten zu erzeugen.

Nach einer Ausführungsform der Erfindung ist die Anzeigevorrichtung als Hybrid-LED-Display ausgebildet. Das Hybrid-LED hat Nanokristalle, deren Emissionswellenlänge von deren Größe abhängt. Die mittlere Größe der Nanokristalle bestimmt dabei die Grundfrequenz. Die Breite der Größenverteilung der Nanokristalle bestimmt dagegen die Breite der spektralen Verteilung der emittierten Strahlung.

In einer besonders bevorzugten Ausführungsform der Erfindung ist die Anzeigevorrichtung ein OLED-Display. Ein farbiges OLED Display besteht aus Anzeigeelementen mit selbstemittierenden Subpixeln. Durch die geeignete Wahl der Emittermaterialien ergibt sich hier die Möglichkeit der vielfältigen spektralen Zusammensetzung der Primärfarben des Displays, z.B. rot, grün, blau. Insbesondere kann die Erzeugung einer Primärfarbe mit dem gleichen visuellen Farbeindruck durch OLED-Materialien mit unterschiedlichen Emissionsspektren realisiert werden. Ein solches Spektrum kann einen charakteristischen Verlauf aufweisen, z.B. mit Spitzen, und kann von einem Lesegerät maschinell erfasst werden, z.B. durch die Verwendung eines Spektrometers.

Die in dem Dokument gespeicherten Daten können verschiedene Inhalte beinhalten, die zur Erzeugung einer Bildwiedergabe auf der Anzeigevorrichtung geeignet sind, das heißt, beispielsweise digitale Bildaufnahmen, insbesondere Gesichtsbilder einer Person, Wappen, Siegel, textuelle Angaben, Barcodes und dergleichen. Insbesondere bei einer Ausführungsform des Dokuments als elektronisches Kraftfahrzeugkennzeichen kann es sich bei den Daten um ein amtliches Kraftfahrzeugkennzeichen handeln, so dass das amtliche Kraftfahrzeugkennzeichen auf der Anzeigevorrichtung angezeigt wird.

Nach einer Ausführungsform der Erfindung handelt es sich bei der Information, die durch die Auswahl der ersten oder zweiten spektralen Zusammensetzung ausgegeben wird, um eine Personalisierungsinformation, ein Sicherheitsmerkmal, einen kryptographischen Schlüssel, eine Fahrzeugparameter und/oder einen Gebührenstatus.

Bei den Personalisierungsinformationen kann es sich beispielsweise um Angaben bezüglich des Trägers des Dokuments handeln, wie zum Beispiel dessen Namen, Wohnort, Größe, Alter, Geschlecht, Gewicht und dergleichen. Diese Angaben können bei der Wiedergabe der gespeicherten Daten ganz oder teilweise im Klartext auf der Anzeigevorrichtung angezeigt werden.

Nach einer Ausführungsform der Erfindung handelt es sich bei der Information um ein Sicherheitsmerkmal, wie zum Beispiel ein Wappen, Siegel oder dergleichen. Diese Information wird zum Beispiel durch die räumliche Anordnung der Bildelemente der ersten und zweiten Teilmengen ausgegeben.

Nach einer Ausführungsform der Erfindung handelt es sich bei der Information um einen kryptographischen Schlüssel. Bei dem kryptographischen Schlüssel kann es sich um einen symmetrischen oder um einen asymmetrischen Schlüssel handeln. Der kryptographische Schlüssel wird von einem Lesegerät erfasst, so dass das Lesegerät zusammen mit dem Dokument ein kryptographisches Protokoll ausführen kann.

Nach einer Ausführungsform der Erfindung handelt es sich bei der Information um einen Fahrzeugparameter und/oder einen Gebührenstatus des Kraftfahrzeugs. Das Dokument, insbesondere in der Ausführungsform als elektronisches Kraftfahrzeugkennzeichen, kann an dem Kraftfahrzeug oder einem Kraftfahrzeugteil befestigt sein.

Bei dem Fahrzeugparameter kann es sich z.B. um die Geschwindigkeit des Kraftfahrzeugs, einen Lärmpegel oder einen Abgaswert handeln. Insbesondere kann durch die Information ausgegeben werden, welche Schadstoffklasse das Kraftfahrzeug erfüllt, insbesondere gemäß der anwendbaren Feinstaubverordnung.

Durch die Ausgabe des Gebührenstatus kann angezeigt werden, ob für das Kraftfahrzeug die vorgeschriebenen Gebühren, Steuern und/oder Abgaben, insbesondere Mautgebühren, Kraftfahrzeugsteuern und/oder Abgasgebühren, bezahlt worden sind.

Nach einer Ausführungsform der Erfindung hat das Dokument einen geschützten Speicherbereich, in dem weitere Daten gespeichert sind. Ferner hat das Dokument eine Schnittstelle für einen lesenden Zugriff des Lesegeräts auf diese weiteren Daten. Die Schnittstelle kann kontaktbehaftet oder kontaktlos, insbesondere als RFID-Schnittstelle ausgebildet sein. Ferner kann die Schnittstelle auch als so genanntes Dual Mode Interface ausgebildet sind.

Bedingung für einen Lesezugriff des Lesegeräts auf die weiteren Daten ist die zuvorige erfolgreiche Ausführung des kryptographischen Protokolls. Bei dem kryptographischen Protokoll kann es sich zum Beispiel um ein sogenanntes Challenge-Response Verfahren handeln. Durch das kryptographische Protokoll werden die weiteren Daten gegen unerlaubte Zugriffe geschützt. Dies ist besonders vorteilhaft, wenn es sich bei den dritten Daten um sensitive Daten handelt, wie zum Beispiel biometrische Daten, insbesondere Fingerabdruckdaten oder Iris-Scandaten des Trägers des Dokuments.

Unter einem "Dokument" werden hier unter anderem Papier basierte und/oder Kunststoff basierte Dokumente verstanden, wie zum Beispiel Ausweisdokumente, insbesondere Reisepässe, Personalausweise, Visa, Führerscheine, Fahrzeugscheine, Fahrzeugbriefe, Firmenausweise, Gesundheitskarten oder andere ID-Dokumente, sowie auch Chipkarten, Zahlungsmittel, insbesondere Bankkarten und Kreditkarten, Frachtbriefe oder sonstige Berechtigungsnachweise.

Unter einem "Dokument" wird auch ein elektronisches Kennzeichen, insbesondere ein elektronisches Kraftfahrzeugkennzeichen, verstanden. Das Dokument kann auch einen integralen Bestandteil eines Transportmittels, insbesondere eines Kraftfahrzeugs, bilden. Beispielsweise kann das Dokument in die Front- bzw. Heckhaube bzw. in das sog. Frontend oder Backend integriert sein, indem dort ein Display erfindungsgemäß eingebracht oder aufgebracht wird.

Das Dokument kann auch metallbasiert sein, insbesondere blechbasiert; es kann also einen Dokumentenkörper aus Blech haben. Es kann aber auch ein Dokumentenkörper aus einem anderen Material haben, wie z.B. aus einem Verbundmaterial, wie er im Fahrzeugbau verwendet wird.

In einem weiteren Aspekt betrifft die Erfindung ein Lesegerät für ein Dokument. Das Lesegerät hat einen Sensor zur Erfassung der spektralen Zusammensetzung des von der Anzeigevorrichtung abgestrahlten Lichts sowie Decodiermittel zur Decodierung der über die Wahl der spektralen Zusammensetzung kodierten Information.

Nach einer Ausführungsform der Erfindung ist das Lesegerät zur Verifikation des Dokuments mit Hilfe der Information ausgebildet. Beispielsweise vergleicht das Lesegerät die empfangene Information mit einer Referenz-Information. Eine hinreichende Übereinstimmung zwischen der empfangenen Information und der Referenzinformation ist eine Voraussetzung dafür, dass das Dokument als echt anerkannt wird.

Nach einer Ausführungsform der Erfindung hat das Lesegerät Mittel zur Ausführung des kryptographischen Protokolls mittels der empfangenen Information. Bei dieser Information handelt es sich beispielsweise um einen kryptographischen Schlüssel. Aufgrund der Erfassung des kryptographischen Schlüssels kann das Lesegerät mit dem Dokument das kryptographische Protokoll ausführen. Nach erfolgreicher Durchführung des kryptographischen Protokolls kann das Lesegerät auf einen geschützten Speicherbereich des Dokuments zugreifen, um von dort Daten auszulesen.

Nach einer Ausführungsform der Erfindung ist das Lesegerät zur Erfassung des Dokuments eines vorbeifahrenden Transportmittels ausgebildet; bei dieser Ausführungsform ist das Dokument beispielsweise als elektronisches Kraftfahrzeugkennzeichen ausgebildet. Das Lesegerät kann z.B. zur Erfassung eines Fahrzeugparameters, eines Fahrparameters oder eines Gebührenstatus des Kraftfahrzeugs dienen, insbesondere zur Durchführung von Verkehrskontrollen, Abgaskontrollen und/oder Gebührenkontrollen.

In einem weiteren Aspekt betrifft die Erfindung ein Verfahren zur Verifikation eines Dokuments. Zur Verifikation des Dokuments wird die von der Anzeigevorrichtung empfangene Information mit einer Referenzinformation verglichen.

Im Weiteren werden Ausführungsformen der Erfindung mit Bezugnahme auf die Zeichnungen näher erläutert. Es zeigen:

Figur 1      ein Blockdiagramm einer Ausführungsform eines erfindungsgemäßen Dokuments,

Figur 2     eine schematische Draufsicht auf eine Ausführungsform einer erfindungsgemäßen Anzeige,

Figur 3     die von Bildelementen der ersten Teilmenge der Anzeigevorrichtung gemäß Figur 2 abstrahlbaren Spektren,

Figur 4     die von Bildelementen der zweiten Teilmenge der Anzeigevorrichtung gemäß Figur 2 abstrahlbaren Spektren,

Figur 5     eine Draufsicht auf eine weitere Ausführungsform der Anzeige,

Figur 6     die von Bildelementen der Anzeigevorrichtung abstrahlbaren Grundfrequenzen,

Figur 7     ein Blockdiagramm zur Veranschaulichung eines nicht beanspruchten Dokuments,

Figur 8     eine Explosionsdarstellung einer weiteren Ausführungsform der Anzeige,

Figur 9     die von den Anzeigeelementen eines Bildelementes in einer OLED Ausführungsform abstrahlbaren Spektren,

Figur 10     die von Bildelementen der ersten Teilmenge der Anzeigevorrichtung gemäß Figur 2 abstrahlbaren Spektren mit unterschiedlichen Grundfrequenzen,

Figur 11     die von Bildelementen der zweiten Teilmenge der Anzeigevorrichtung gemäß Figur 2 abstrahlbaren Spektren mit unterschiedlichen Grundfrequenzen,

Figur 12     ein Blockdiagramm einer weiteren Ausführungsform eines erfindungsgemäßen Dokuments.

Elemente der nachfolgenden Ausführungsformen, die einander entsprechen, sind mit denselben Bezugszeichen gekennzeichnet.

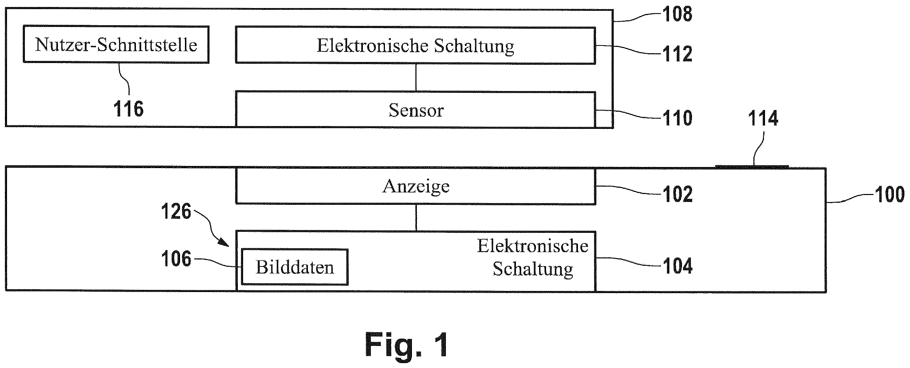

Die Figur 1 zeigt ein Dokument 100 mit einer in den Dokumentenkörper des Dokuments 100 integrierten Anzeige 102 und einer elektronischen Schaltung 104 zur Ansteuerung der Anzeige 102. Die Anzeige 102 beinhaltet eine Vielzahl von Anzeigeelementen, die beispielsweise matrixförmig angeordnet sein können. Insbesondere kann es sich bei der Anzeige 102 um eine Passiv- oder eine Aktiv-Matrixanzeige handeln.

Die elektronische Schaltung 104 beinhaltet einen oder mehrere elektronische Speicher 126 zur Speicherung insbesondere von Daten 106. Die elektronische Schaltung 104 kann auf die Daten 106 zugreifen. Insbesondere dient die elektronische Schaltung 140 zum Zugriff auf die Daten 106, um die Anzeige 102 zur Wiedergabe der Daten 106 anzusteuern, sodass ein Benutzer des Dokuments 100 die Wiedergabe der Daten 106 visuell wahrnehmen kann.

Bei den Daten 106 kann es sich zum Beispiel um Bilddaten handeln. Unter "Bilddaten" werden hier Daten verstanden, die sich zur Wiedergabe auf der Anzeige 102 eignen, d.h. zum Beispiel eine digitale Fotografie, textuelle Angaben, ein ein- oder zweidimensionaler Barcode oder dergleichen.

Die elektronische Schaltung 104 ist so ausgebildet, dass während einer Bildwiederholperiode sämtliche der Anzeigeelemente der Anzeige 102 einmal angesteuert werden, um so die Daten 106 auf der Anzeige 102 wiederzugeben. Dies kann mit einer Bildwiederholfrequenz von zum Beispiel 25 Hz oder 50 Hz erfolgen. Neben der Wiedergabe der Daten 106 dient die Anzeige 102 zur Ausgabe einer Information. Die Ausgabe dieser Information erfolgt dadurch, dass eine subjektive Farbwahrnehmung bei einem Benutzer durch Abstrahlung von Licht entweder einer ersten spektralen Zusammensetzung oder einer zweiten spektralen Zusammensetzung hervorgerufen wird. Die Auswahl der ersten oder der zweiten spektralen Zusammensetzung für Bildelemente, welche zur Wiedergabe der Daten 106 diese Farbwahrnehmung hervorrufen sollen, kann räumlich und/oder zeitlich aufgelöst erfolgen.

In Abhängigkeit von der gewählten Ausführungsform kann die von der Anzeige 102 ergänzend zu der Wiedergabe der Daten ausgegebene Information statisch sein oder zeitlich veränderbar sein.

Zur Ausgabe einer statischen Information kann die Anzeige eine erste Teilmenge von Bildelementen aufweisen, die zur Abstrahlung von Licht der ersten spektralen Zusammensetzung ausgebildet sind. Ferner hat die Anzeigevorrichtung eine zweite Teilmenge von Bildelementen die zur Abstrahlung von Licht der zweiten spektralen Zusammensetzung ausgebildet sind. Bei dieser Ausführungsform ist die Information durch die räumliche Anordnung der Bildelemente der ersten und zweiten Teilmengen codiert. Bei dieser Ausführungsform sind also die ersten und zweiten Teilmengen disjunkt.

Nach nicht beanspruchten Ausführungsformen ist es ferner möglich, dass drei oder mehrere verschiedene spektrale Zusammensetzungen des Lichts wählbar sind, um dieselbe subjektive Farbwahrnehmung zu erzeugen, sodass dementsprechend die Information mit einer größeren Bitrate übertragbar ist.

Bei der Information kann es sich zum Beispiel um eine Personalisierungsinformation, ein Sicherheitsmerkmal und/oder einen kryptographischen Schlüssel handeln. Insbesondere kann es sich hierbei um einen oder mehrere benutzerspezifische Informationen, wie zum Beispiel Informationen über den Träger des Dokuments, handeln, und/oder Informationen bezüglich der Gültigkeit des Dokuments, der ausstellenden Behörde oder dergleichen.

Das Lesegerät 108 hat einen optischen Sensor 110, wie zum Beispiel einen CCD-Sensor oder einen optischen Scanner. Der Sensor 110 ist dazu ausgebildet, die spektrale Zusammensetzung des von der Anzeige 102 abgestrahlten Lichts zu erfassen, um zu überprüfen, ob das Licht die erste oder die zweite spektrale Zusammensetzung aufweist.

Der Sensor 110 ist mit einer elektronischen Schaltung 112 des Lesegeräts 108 verbunden. Durch die elektronische Schaltung 112 ist ein Decoder implementiert, um die in der Wahl der ersten oder der zweiten spektralen Zusammensetzung codierte Information zu decodieren.

Das Lesegerät 108 hat ferner eine Nutzerschnittstelle 116. Alternativ oder zusätzlich kann das Lesegerät 108 auch eine Schnittstelle zu einem Computer und/oder einem Netzwerk aufweisen.

Nachdem die Information von der Anzeige 102 durch das Lesegerät 108 empfangen worden ist, wird die Information beispielsweise über die Nutzerschnittstelle 116 ausgegeben.

Beispielsweise handelt es sich bei der Information um eine Personalisierungsinformation. Diese Personalisierungsinformation kann auf dem Dokument 100 als Aufdruck 114 im Klartext angegeben sein. Durch Vergleich der über die Nutzerschnittstelle 116 ausgegebenen Personalisierungsinformation mit der auf dem Aufdruck 114 des Dokuments 100 angegebenen Personalisierungsinformation kann also eine Prüfung der Echtheit des Dokuments erfolgen, da die von dem Lesegerät 100 empfangene Information mit der auf dem Aufdruck 114 gezeigten Personalisierungsinformation übereinstimmen muss.

Bei der Information kann es sich auch um ein Wappen, Siegel oder ein anderes Sicherheitsmerkmal handeln. Die ein solches Sicherheitsmerkmal repräsentierende Information wird mit Hilfe des Sensors 110 des Lesegeräts 108 erfasst. Nach der Decodierung wird die empfangene Information mit einer in der elektronischen Schaltung 112 gespeicherten Referenzinformation verglichen. Wenn die optisch empfangene Information mit der Referenzinformation hinreichend übereinstimmt, wird über die Nutzerschnittstelle 116 ein akustisches oder optisches Signal ausgegeben, welches anzeigt, ob das Dokument 100 die Echtheitsprüfung bestanden hat oder nicht.

Bei der Information, die von der elektronischen Schaltung 104 über die Anzeige 102 durch die verschiedenen spektralen Zusammensetzungen ausgegeben wird, kann es sich auch um einen Fahrzeugparameter und/oder einen Gebührenstatus handeln. Bei dieser Ausführungsform ist das Dokument 100 als elektronisches Kraftfahrzeug-Kennzeichen ausgebildet, welches an einem Kraftfahrzeug angebracht ist oder welches einen integralen Bestandteil des Kraftfahrzeugs bildet.

Beispielsweise kann die elektronische Schaltung 104 eine Schnittstelle zu einem Kraftfahrzeug-Elektronikgerät aufweisen, welches die auszugebende Information an die Schnittstelle der elektronischen Schaltung 104 in regelmäßigen oder unregelmäßigen Zeitabständen sendet. Bei dem Kraftfahrzeug-Elektronikgerät kann es sich beispielsweise um eine sogenannte Electronic Control Unit (ECU) handeln. Das Kraftfahrzeug-Elektronikgerät kann über ein Kraftfahrzeug-Bussystem mit der elektronischen Schaltung 104 vernetzt sein, um über das Kraftfahrzeug-Bussystem die auszugebende Information zu übertragen.

Beispielsweise kann das Kraftfahrzeug-Elektronikgerät zur Erfassung eines Fahrzeug-Parameters dienen, und zwar auf der Basis von Sensorsignalen. Beispielsweise dient ein Sensor zur Erfassung eines aktuellen Abgaswerts des Kraftfahrzeugs. Dieser aktuelle Abgaswert wird in Form einer Information von dem Kraftfahrzeug-Elektronikgerät an die elektronische Schaltung 104 übertragen, sodass der Abgaswert über die Anzeige 102 ausgegeben wird. Entsprechend kann für weitere Fahrzeugparameter, wie zum Beispiel die Geschwindigkeit, den aktuell von dem Kraftfahrzeug erzeugten Lärmpegel oder andere Umwelt- und/oder sicherheitsrelevante Fahrzeugparameter verfahren werden.

Alternativ oder zusätzlich ist das Kraftfahrzeug-Elektronikgerät zur Bestimmung eines Gebührenstatus ausgebildet. Beispielsweise wird durch das Kraftfahrzeug-Elektronikgerät festgestellt, ob eine erforderliche Gebühr, wie zum Beispiel eine Mautgebühr, eines Steuer oder eine Abgasgebühr, für das Kraftfahrzeug entrichtet worden ist oder zu entrichten ist. Eine entsprechende Information, die den Gebührenstatus angibt, wird von dem Kraftfahrzeug-Elektronikgerät an die elektronische Schaltung 104 ausgegeben, sodass diese Information über die Anzeige 102 ausgegeben wird.

Dementsprechend kann das Lesegerät 108 zur Erfassung der Information, die über die Anzeige 102 ausgegeben wird, von dem stehenden und/oder von dem fahrenden Kraftfahrzeug ausgebildet sein. Das Lesegerät 108 kann über ein Netzwerk mit einem zentralen Servercomputer verbunden sein, in dem die von der Anzeige 102 erfasste Information ausgewertet wird.

Bei den Daten 106 kann es sich hier um das amtliche Kraftfahrzeug-Kennzeichen handeln. Auf der Anzeige 102 wird also visuell sichtbar das amtliche Kraftfahrzeug-Kennzeichen ausgegeben sowie zusätzlich eine oder mehrere weitere Informationen, die visuell ohne ein Lesegerät nicht wahrnehmbar sind. Bei dieser Ausführungsform kann eine Aktualisierung des amtlichen Kennzeichens dadurch erfolgen, dass eine Aktualisierung der Daten 106 vorgenommen wird, beispielsweise indem Daten, die das aktualisierte amtliche Kennzeichen beinhalten, von dem Kraftfahrzeug-Elektronikgerät über das Kraftfahrzeug-Bussystem an die elektronische Schaltung 104 gesendet werden, welches die Daten 106 dann mit den empfangenen Daten überschreibt.

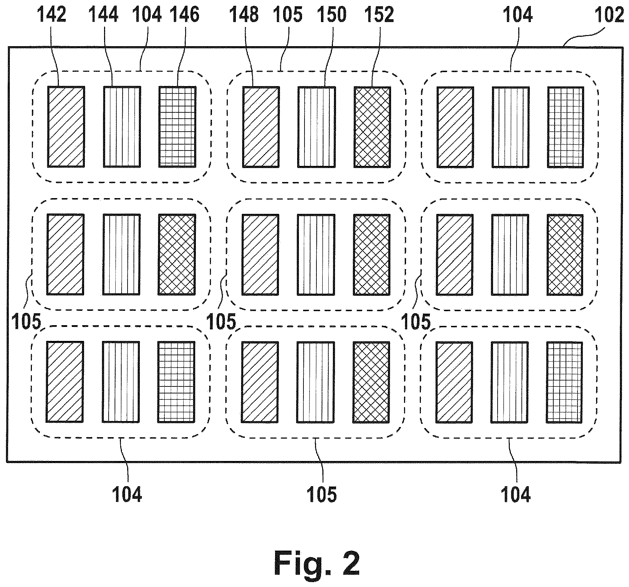

Die Figur 2 zeigt eine Ausführungsform der Anzeige 102. In der Ausführungsform der Figur 2 hat die Anzeige 102 erste und zweite Teilmengen von Bildelementen, wobei die erste Teilmenge Bildelemente 104 und die zweite Teilmenge Bildelemente 105 beinhaltet.

Die Bildelemente 104 werden jeweils durch Anzeigeelemente 142, 144 und 146 gebildet. Die Anzeigeelemente 142 dienen zur Abgabe einer Strahlungskomponente einer ersten Grundfrequenz, die Anzeigeelemente 144 zur Abgabe einer Strahlungskomponente einer zweiten Grundfrequenz und die Anzeigeelemente 146 zur Abgabe einer Strahlungskomponente einer dritten Grundfrequenz.

Die Bildelemente 105 werden dagegen jeweils durch Anzeigeelemente 148, 150 und 152 gebildet. Die Anzeigeelemente 148 dienen zur Abgabe einer Strahlungskomponente einer vierten Grundfrequenz, die Anzeigeelemente 150 zur Abgabe einer Strahlungskomponente einer fünften Grundfrequenz und die Anzeigeelemente 152 zur Abgabe einer Strahlungskomponente einer sechsten Grundfrequenz.

Durch die räumliche Anordnung der Bildelemente 105 und das hierdurch gebildete Muster beinhaltet die Anzeige 102 ein Sicherheitsmerkmal. Das Muster ist bei der hier betrachteten Ausführungsform als Linienkreuz ausgebildet. Alternativ kann es sich bei dem Muster zum Beispiel um ein Wappen, Siegel, Hoheitszeichen oder dergleichen handeln.

Basierend auf den Grassmannschen Gesetzen kann jede subjektive Farbwahrnehmung als Linearkombination von drei Strahlungskomponenten unterschiedlicher Grundfrequenzen hervorgerufen werden. Aufgrund dieser Gegebenheit können die Bildelemente 104 und 105 so angesteuert werden, dass sie jeweils dieselbe subjektive Farbwahrnehmung hervorrufen können. Für den Betrachter macht es also keinen visuellen Unterschied, ob ein Bildelement 104 oder ein Bildelement 105 zur Erzeugung einer bestimmten Farbwahrnehmung von der elektronischen Schaltung 104 (vgl. Figur 1) angesteuert wird, um die Daten 106 auf der Anzeigevorrichtung wiederzugeben.

Aufgrund der unterschiedlichen spektralen Zusammensetzung des abgestrahlten Lichts, je nachdem, ob die Erzeugung einer bestimmten Farbwahrnehmung von einem Bildelement 104 oder 105 herrührt, beinhaltet die Wiedergabe der Daten 106 eine zusätzliche Information, die nur maschinell erfassbar ist, wobei es sich bei dieser Information hier um das durch die Anordnung der Bildelemente 105 gebildete kreuzförmige Muster handelt.

Zur Erzeugung der unterschiedlichen spektralen Zusammensetzungen genügt es, wenn sich die Bildelemente 104 und 105 nur hinsichtlich eines einzigen der Anzeigeelemente unterscheiden. Beispielsweise können die Anzeigeelemente 142 und 148 identisch sein, d.h. dieselbe Strahlungskomponente abgeben, ebenso wie die Anzeigeelemente 144 und 150. Die Anzeigeelemente 146 und 152 unterscheiden sich, d.h. die von den Anzeigeelementen 146 abgegebene dritte Grundfrequenz ist verschieden von der von den Anzeigeelementen 152 abgegebenen sechsten Grundfrequenz.

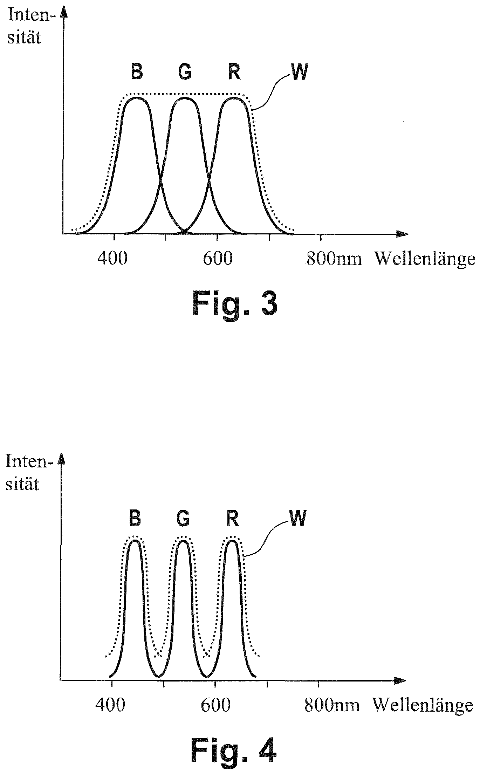

Die Bildelemente 104 und 105 können aber auch so ausgebildet sein, dass sie hinsichtlich sämtlicher Grundfrequenzen identisch sind und sich nur hinsichtlich zumindest eines der Spektren, die von den Anzeigeelementen abgegeben werden, unterscheiden. Die Fig. 3 und 4 zeigen eine Ausführungsform, bei der die Grundfrequenzen für die Strahlungskomponenten RGB der Bildelemente 104 und 105 jeweils gleich sind, wobei sich aber die Form der Spektren für die Strahlungskomponenten RGB der entsprechenden Anzeigeelemente voneinander unterscheiden.

Beispielsweise haben die Anzeigeelemente 142 eine Grundwellenlänge von 450 nm, die Anzeigeelemente 144 eine Grundwellenlänge von 600 nm und die Anzeigeelemente 146 eine Grundwellenlänge von 540 nm. Die Anzeigeelemente 142 strahlen also in blauer Farbe (B), die Anzeigeelemente 144 in roter Farbe (R) und die Anzeigeelemente 146 in grüner Farbe (G) ab. Die entsprechenden Spektren sind in der Figur 3 dargestellt. Wenn alle Strahlungskomponenten B, G und R mit derselben Intensität abgestrahlt werden, erhält man einen weißen (W) Farbeindruck. Durch Variation der relativen Intensitäten der Strahlungskomponenten B, G und R lassen sich verschiedene Farbwahrnehmungen erzeugen, je nach der wiederzugebenden Bildinformation.

In Fig. 3 sind Spektren dreier Farbstoffe für die Anzeigeelemente dargestellt, wobei hier die Anzeigeelemente 148 (B) eine Grundwellenlänge von 450 nm, die Anzeigeelemente 150 (R) eine Grundwellenlänge von 600 nm und die Anzeigeelemente 152 (G) eine Grundwellenlänge von 540 nm haben.

In Fig. 4 sind Spektren dreier Farbstoffe für die Anzeigeelemente 148, 150, 152 der Bildelemente 105 dargestellt, welche mit den in Abbildung 3 dargestellten Farbstoffen identische Grundwellen aufweisen. Wie in der Fig. 3 haben hier also die Anzeigeelemente 148 (B) eine Grundwellenlänge von 450 nm, die Anzeigeelemente 150 (R) eine Grundwellenlänge von 600 nm und die Anzeigeelemente 152 (G) eine Grundwellenlänge von 540 nm.

Im Gegensatz zu den Farbstoffen der Fig. 3 weisen die Farbstoffe der Fig. 4 einen anderen spektralen Verlauf auf. In der hier betrachteten Ausführungsform sind die spektralen Breiten der Farbstoffe der Fig. 4 deutlich schmaler als die der Farbstoffe der Fig.3. Der spektrale Verlauf kann sich auch in der Feinstruktur unterscheiden. Das Auge ist nicht in der Lage, den Unterschied wahrzunehmen, jedoch ein Lesegerät kann die Unterschiede detektieren.

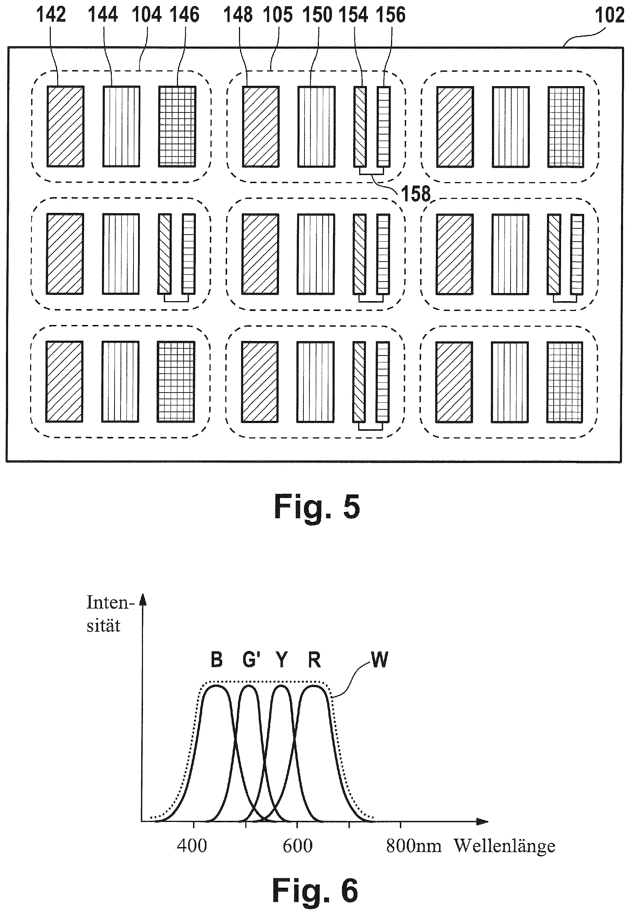

Die Figur 5 zeigt eine weitere Ausführungsform der Anzeige 102. Die Bildelemente 104 sind bei der Ausführungsform der Figur 5 so ausgebildet wie bei der Ausführungsform der Figur 2. Im Unterschied zu der Ausführungsform der Figur 2 bestehen die Bildelemente 105 aus vier Anzeigeelementen 148, 150, 154 und 156. Die Anzeigeelemente 148 sind zur Abgabe einer Strahlungskomponente einer vierten Grundfrequenz ausgebildet, die der ersten Grundfrequenz gleicht, die von den Anzeigeelementen 142 abgegeben werden kann. Entsprechendes gilt für die Anzeigeelemente 144 und 150, deren zweite Grundfrequenz bzw. fünfte Grundfrequenz identisch sind.

Die Anzeigeelemente 154 dienen dagegen zur Abgabe einer Strahlungskomponente einer siebten Grundfrequenz und die Anzeigeelemente 156 zur Abgabe einer Strahlungskomponente einer achten Grundfrequenz. Die siebte Grundwellenlänge ist dabei etwas kleiner als die sechste Grundwellenlänge und die achte Grundwellenlänge ist etwas größer als die sechste Grundwellenlänge gewählt. Beispielsweise beträgt die siebte Grundwellenlänge zur Erzeugung eines grünen Farbanteils G' 510 nm und die achte Grundwellenlänge zur Erzeugung eines gelben Farbanteils Y beträgt 560 nm. Bei dieser Ausführungsform wird also die Strahlungskomponente G in der Ausführungsform der Figur 2 durch die sich überlagernden Strahlungskomponenten G' und Y ersetzt. Die entsprechenden Spektren zeigt die Figur 6.

Bei der in der Figur 5 betrachteten Ausführungsform sind die Anzeigeelemente 154 und 156 eines Bildelements 105 nur zusammen ansteuerbar. Hierzu sind sie jeweils mit einem elektrischen Leiter 158 verbunden, welcher mit einer Zeilen- und/oder Spaltenleitung (in der Figur 5 der Übersichtlichkeit halber nicht gezeigt) verbunden ist, um die Anzeigeelemente 154, 156 eines Bildelements 105 zusammen anzusteuern.

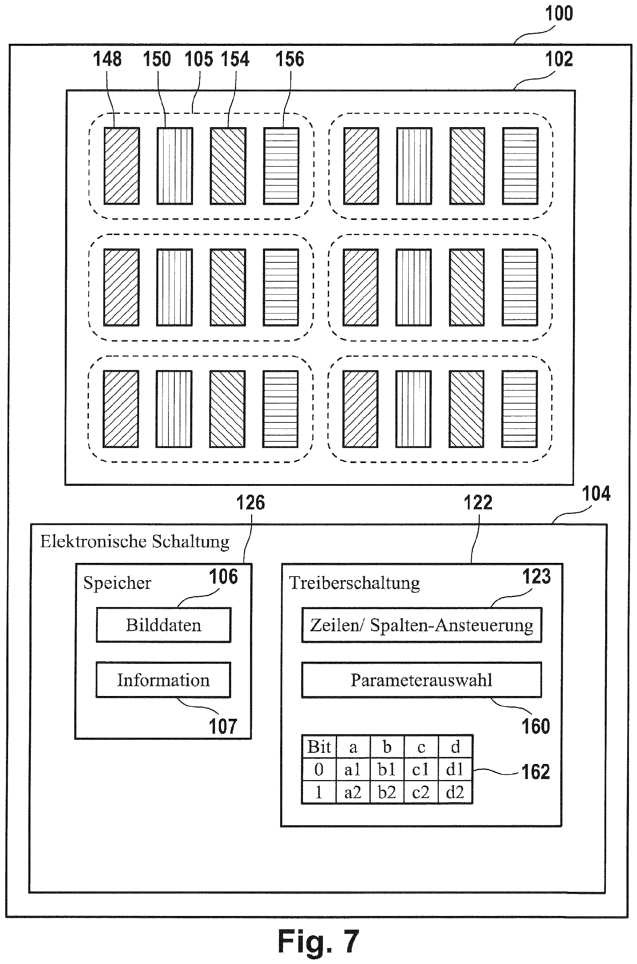

Die Figur 7 zeigt ein Beispiel für ein nicht beanspruchtes Dokument 100. Bei diesem Beispiel beinhaltet die Anzeige 102 die Bildelemente 105, die jeweils durch die Anzeigeelemente 148, 150, 154 und 156 gebildet werden. Im Unterschied zu der Ausführungsform der Figur 5 sind auch die Anzeigeelemente 154 und 156 unabhängig voneinander ansteuerbar. Beispielsweise ist die Anzeige 102 so ausgebildet, dass alle ihrer Bildelemente so wie die in der Figur 7 exemplarisch gezeigten Bildelemente 105 ausgebildet sind. Dies kann auch nur für einen Teilbereich der Anzeige 102 der Fall sein.

Die elektronische Schaltung 104 hat in dem Beispiel der Figur 7 einen elektronischen Speicher 126 zur Speicherung von Daten 106 und zur Speicherung der Information 107. Ferner hat die elektronische Schaltung 104 eine Treiberschaltung 122 mit einer Treiberlogik 123 zur Ansteuerung der einzelnen Anzeigeelemente 148, 150, 154 und 156 der verschiedenen Bildelemente 105.

Diese Ansteuerung kann über in der Figur 7 der Übersichtlichkeit halber nicht gezeigte Zeilenleitungen und/oder Schreibleistungen erfolgen. Beispielsweise erfolgt die Ansteuerung so, dass innerhalb einer Bildwiederholperiode sämtliche der Bildelemente 105 zeilenweise angesteuert werden. Die Ansteuerung eines einzelnen Bildelements 105 erfolgt dabei so, dass für jedes der Anzeigeelemente 148, 150, 154 und 156 dieses Bildelements 105 ein Intensitätswert spezifiziert wird. Diese Intensitätswerte entsprechen einer der von dem betreffenden Bildelement 105 zu erzeugenden Farbwahrnehmung zur Wiedergabe der Daten 106.

Nach den Grassmannschen Gesetzen ergibt sich also hier eine gewünschte Farbwahrnehmung einer Farbe F durch eine Linearkombination der vier verschiedenen Strahlungskomponenten:

$$F = a \cdot B + b \cdot R + c \cdot G' + d \cdot Y,$$

wobei

F = Farbwahrnehmung,
B = Strahlungskomponente der vierten Grundfrequenz,
a = Parameter zur Spezifizierung der Intensität der Strahlungskomponente B,
R = Strahlungskomponente der fünften Grundfrequenz,
b = Parameter zur Spezifizierung der Intensität der Strahlungskomponente R,
G' = Strahlungskomponente der siebten Grundfrequenz,
c = Parameter zur Spezifizierung der Intensität der Strahlungskomponente G",
Y = Strahlungskomponente der achten Grundfrequenz
d = Parameter zur Spezifizierung der Intensität der Strahlungskomponente Y.

Da nach den Grassmannschen Gesetzen aber lediglich drei Strahlungskomponenten unterschiedlicher Grundfrequenz zur Erzeugung einer gewünschter Farbwahrnehmung F erforderlich sind, können verschiedene Parametersätze der Parameter a, b, c, d verwendet werden, um dieselbe Farbwahrnehmung F hervorzurufen. Durch diese Wahl der Parametersätze wird die Information 107 über die Anzeige 102 ausgegeben.

Die Treiberschaltung 122 hat eine Komponente 160 für die Auswahl solcher Parametersätze. Hierzu dient eine Codierungstabelle 162. Die Figur 7 zeigt lediglich einen Ausschnitt dieser Codierungstabelle 162 für eine bestimmte Farbe F.

Wenn ein bestimmtes Bildelement 105 zur Wiedergabe der Bilddaten 106 angesteuert werden soll, um eine Farbwahrnehmung der Farbe F zu erzeugen, so können hierzu wahlweise ein erster Parametersatz mit den Parameterwerten al, b1, c1 und d1 für die Parameter a, b, c und d oder ein zweiter Parametersatz mit den Werten a2, b2, c2 und d2 verwendet werden.

Bei Wahl des ersten Parametersatzes wird hierdurch eine logische Null über die Anzeige 102 ausgegeben, bei Wahl des zweiten Parametersatzes dagegen eine logische Eins. Zur Auswahl des ersten oder zweiten Parametersatzes greift die Komponente 160 auf die Information 107 zu, um diese bitweise durch Wahl der ersten oder zweiten Parametersätze auszugeben.

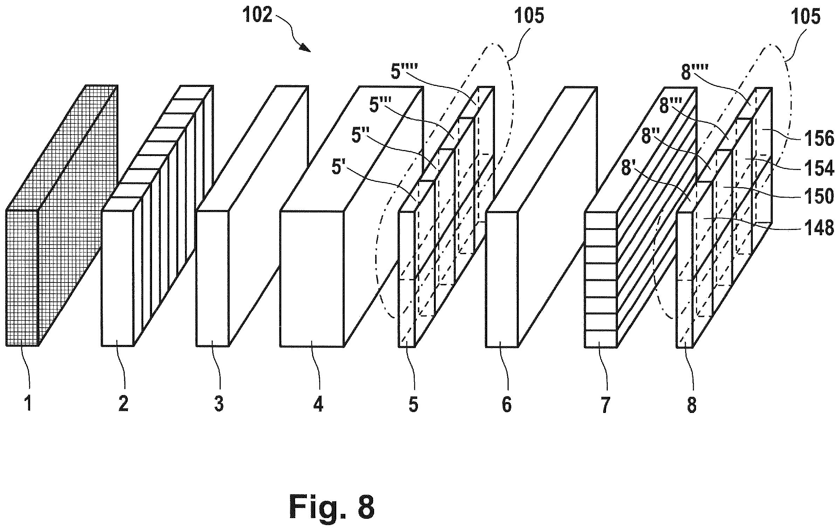

Die Figur 8 zeigt eine weitere Ausführungsform der Anzeige 102. Bei dieser Ausführungsform handelt es sich um ein Farb-Flüssigkristall (LC-Display) mit einem zusätzlichen Sub-Pixel. Üblicherweise wird bei einem Farb-LC-Display nämlich jedes Bildelement (Pixel) durch drei Anzeigeelemente (Sub-Pixel) gebildet, zum Beispiel für die Farben Blau (B), Grün (G) und Rot (R). Bei der hier betrachteten Ausführungsform hat jedes Bildelement 105 ein zusätzliches Anzeigeelement, d.h. die Anzeigeelemente 148, 150, 154 und 156, für die Strahlungskomponenten B, R, G' und Y (vgl. Figur 6).

Die Anzeigevorrichtung 102 hat einen Reflektor 1, vor dem ein unterer Polarisator 2 einer ersten Polarisationsrichtung angeordnet ist. Auf den Polarisator 2 folgt ein Substrat 3 mit einer transparenten Rückelektrode. Auf dem Substrat 3 befindet sich eine flüssigkristalline Schicht, auf der sich eine strukturierte Elektrode 5 befindet.

Auf der Elektrode 5 befindet sich ein transparentes Substrat 6, gefolgt von einem oberen Polarisator 7, einer zweiten Polarisationsrichtung, die im Wesentlichen senkrecht auf der ersten Polarisationsrichtung des unteren Polarisators 2 steht. Vor dem Polarisator 7 befindet sich ein Filter 8, der verschiedene Farbfilter 8', 8", 8‴ und 8"" beinhaltet.

Beispielsweise wird das Bildelement 105 der Anzeigevorrichtung 102 durch die Teilelektroden 5', 5", 5‴ und 5"" gebildet. Vor diesen Teilelektroden befinden sich entsprechende Farbfilter 8', 8", 8‴ und die Licht der Strahlungskomponenten B, R, G' bzw. Y durchlassen.

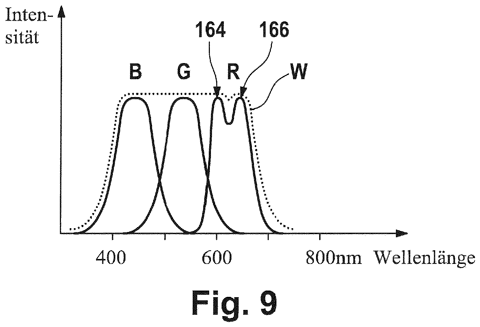

Die Fig. 9 zeigt exemplarisch die von den Anzeigelementen eines Bildelements, beispielsweise eines Bildelements 104 oder 105 in der Ausführungsform der Fig. 2, abstrahlbaren Spektren, wobei die Anzeigelemente hier als OLED Subpixel ausgebildet sind. Das Bildelement hat je einen Subpixel für die Strahlungskomponenten R, G und B. Das Spektrum der Strahlungskomponente R ist hier besonders charakteristisch mit zwei voneinander beabstandeten Spitzen 164 und 166 ausgebildet. Dies vereinfacht die maschinelle Erfassung mit einem Lesegerät.

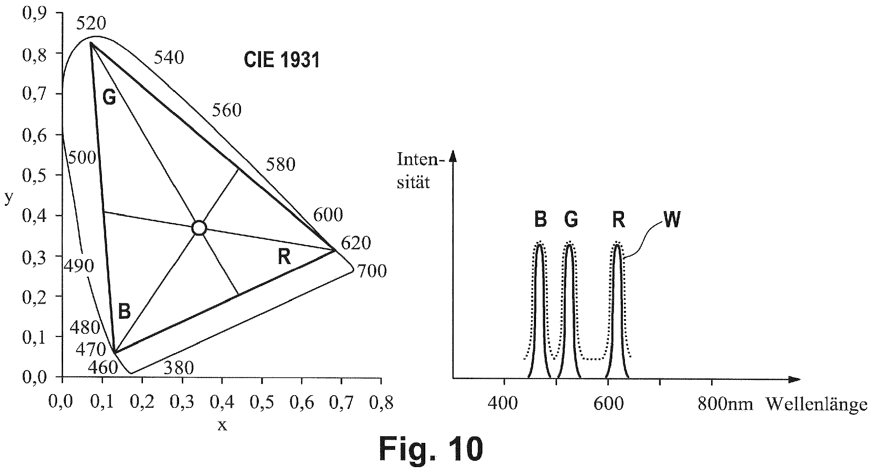

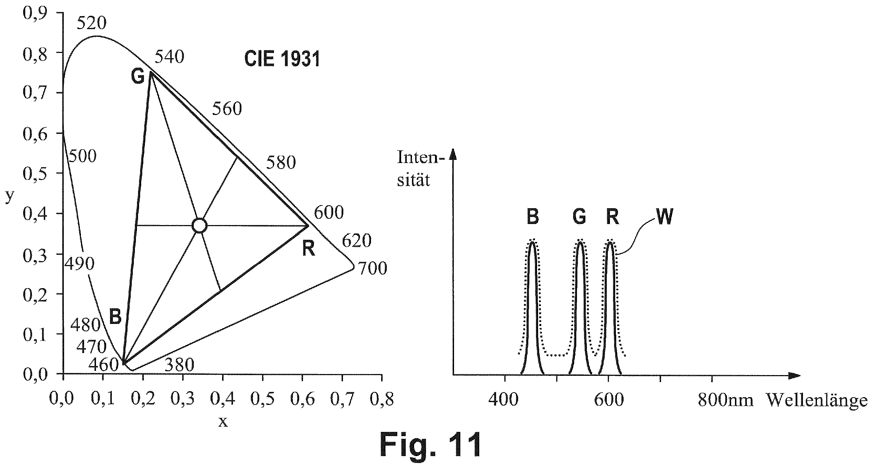

Die Figuren 10 und 11 beziehen sich auf eine Ausführungsform der Anzeige 102, bei der die einander entsprechenden Anzeigelemente der Bildelemente 104 und 105 (vgl. Fig. 2) Strahlungskomponenten jeweils unterschiedlicher Grundfrequenzen mit im wesentlichen den gleichen Formen der Spektren aufweisen.

Die Farbstoffe einer ersten Sorte von Anzeigelementen 142, 144, 146 der Bildelemente 104 haben eine erste Reihe von Grundfrequenzen, wie in Fig. 10 dargestellt. Eine weitere Sorte von Farbstoffen der Anzeigelemente 148, 150, 152 der Bildelemente 105 haben eine hiervon abweichende zweite Reihe von Grundfrequenzen, wie in Fig. 11 dargestellt. Hierbei können eine, zwei oder alle drei Grundfrequenzen der ersten und der zweiten Reihe verschieden sein; in der gezeigten Ausführungsform sind alle Grundfrequenzen der ersten und zweiten Reihen verschieden.

Da mit Hilfe beider Gruppen von Grundfrequenzen der Bildelemente 104 bzw. 105 jede Farbe darstellbar ist, in den Fig. 10 und 11 am Beispiel weiß als Punkt im CIE Diagramm gezeigt, kann das Auge nicht zwischen Pixeln unterscheiden, welche von der Bildelementen 104 und 105 dargestellt werden.

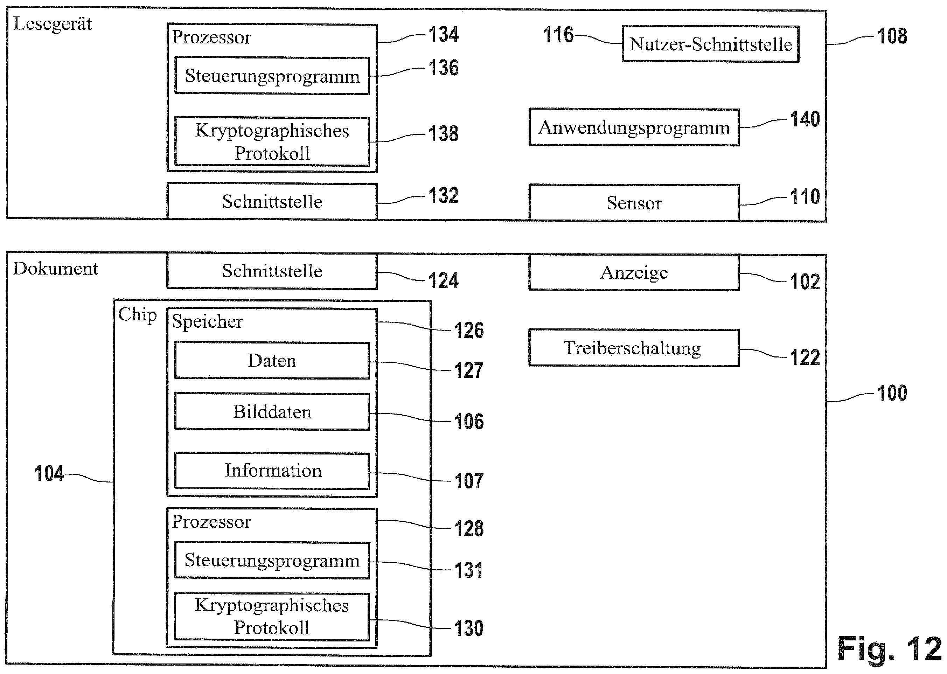

Die Figur 12 zeigt eine weitere Ausführungsform des Dokuments 100 und des Lesegeräts 108.

Die elektronische Schaltung 104 des Dokuments 100 ist hier als Chip, insbesondere als RFID-Chip, ausgebildet. Die elektronische Schaltung 104 ist mit einer Schnittstelle 124 des Dokuments 100 zur Kommunikation mit dem Lesegerät 108 verbunden. Die Schnittstelle 124 kann beispielsweise ein oder mehrere Antennenwindungen, die in einem Randbereich des Dokuments 100 verlaufen, aufweisen.

Die Schaltung 104 hat einen elektronischen Speicher 126 zur Speicherung von schutzbedürftigen Daten 127. Bei den schutzbedürftigen Daten 127 kann es sich beispielsweise um biometrische Daten des Trägers des Dokuments 100, wie zum Beispiel Fingerabdruckdaten, Iris-Scandaten oder dergleichen handeln. Die schutzbedürftigen Daten 127 sind in einem besonders geschützten Speicherbereich des Speichers 126 gespeichert.

Ferner sind in demselben Speicher 126 oder einem anderen elektronischen Speicher des Dokuments 100 die Daten 106 und die Information 107 gespeichert. Die Schaltung 104 hat ferner einen Prozessor 128 zur Ausführung von Programminstruktionen 130, durch die die das Dokument 100 betreffenden Schritte eines kryptographischen Protokolls implementiert werden. Der Prozessor 128 dient ferner zur Ausführung von Programminstruktionen 131, die ein Steuerungsprogramm implementieren.

Das Lesegerät 108 hat einen optischen Sensor 110 zur Erfassung der von den Bildelementen der Anzeige 102 abgestrahlten Strahlungskomponenten. Bei dem optischen Sensor 110 kann es sich um einen CCD-Sensor oder einen Scanner handeln.

Das Lesegerät 108 hat ferner eine Schnittstelle 132, die der Schnittstelle 124 des Dokuments 100 entspricht. Beispielsweise ist also die Schnittstelle 132 für eine RFID-Kommunikation mit dem Dokument 100 bzw. dessen Schaltung 104 ausgebildet. Die Schnittstellen 124, 132 können kontaktbehaftet, kontaktlos oder als so genanntes Dual-Mode-Interface ausgebildet sein. Die Schnittstelle kann auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein.

Das Dokument 108 hat zumindest einen Prozessor 134 zur Ausführung eines Steuerungsprogramms 136 sowie von Programminstruktionen 138, durch die die das Lesegerät 108 betreffenden Schritte des kryptographischen Protokolls implementiert werden. Das Lesegerät 108 kann ferner zur Ausführung eines Anwendungsprogramms 140 dienen. Das Anwendungsprogramm 140 kann auch von einem anderen Computersystem ausgeführt werden, welches mit dem Lesegerät 108 verbunden ist.

Das durch die Programminstruktionen 131 implementierte Steuerungsprogramm des Dokuments 100 ist so ausgebildet, dass es die Treiberschaltung 122 zur Wiedergabe der Daten 106 ansteuert. Die Treiberschaltung greift dabei auf die Information 107 zu, um die Parametersätze entsprechend zu wählen, wie das bei der Ausführungsform der Fig. 7 der Fall ist, so dass die Information 107 über die Anzeige 102 ausgegeben wird.

Zum Zugriff auf die Daten 127 des Speichers 126 erfasst das Lesegerät 108 zunächst mittels seines optischen Sensors 110 die Anzeige 102. Hierzu wird der Sensor 110 entsprechend von dem Steuerungsprogramm 136 angesteuert. Das Steuerungsprogramm 136 dekodiert die in der spektralen Zusammensetzung des von der Anzeige abgestrahlten Lichts beinhalte Information, um so die Information zu empfangen. Auf diese Art und Weise erhält das Steuerungsprogramm 136 Kenntnis des kryptographischen Schlüssels.

Nach der Erfassung des kryptographischen Schlüssels startet das Steuerungsprogramm 136 die Ausführung der Programminstruktionen 138, so dass das kryptographische Protokoll zwischen dem Lesegerät 108 und dem Dokument 100 mit Hilfe des kryptographischen Schlüssels durchgeführt wird. Beispielsweise handelt es sich bei dem kryptographischen Protokoll um ein Challenge-Response-Verfahren.

Das Challenge-Response-Verfahren kann beispielsweise so ablaufen, dass das Lesegerät 108 zunächst eine Anforderung der Daten 127 an die Schnittstelle 124 des Dokuments 100 sendet. Daraufhin wird die Ausführung der Programm instruktionen 130 gestartet. Hierdurch wird seitens des Dokuments 100 z. B. eine Zufallszahl generiert, die mit einem Referenzwert des kryptographischen Schlüssels symmetrisch verschlüsselt wird, so dass ein Chiffrat resultiert. Die verschlüsselte Zufallszahl, d.h. das Chiffrat, wird von der Schnittstelle 124 des Dokuments 100 an die Schnittstelle 132 des Lesegeräts 108 gesendet.

Durch Ausführung der Programminstruktionen 138 wird seitens des Lesegeräts 108 das von dem Dokument 100 empfangene Chiffrat mit Hilfe des zuvor empfangenen kryptographischen Schlüssels entschlüsselt. Das Resultat der Entschlüsselung wird von der Schnittstelle 132 an die Schnittstelle 124 des Dokuments 100 gesendet.

Mit Hilfe der Programminstruktionen 130 wird dann seitens des Dokuments 100 geprüft, ob das Ergebnis der Entschlüsselung des Chiffrats, welche das Dokument von dem Lesegerät 108 empfangen hat, identisch ist mit der initial durch das Dokument 100 erzeugten Zufallszahl. Wenn dies der Fall ist, stimmt der Referenzwert des kryptographischen Schlüssels, der in den Programminstruktionen 130 beinhaltet ist, oder auf den diese zugreifen können, mit dem aus der Bildwiedergabe der Anzeige 102 durch das Lesegerät 108 erfassten kryptographischen Schlüssel überein, wodurch die Authentizität des Dokuments 100 und die Zugriffsberechtigung des Lesegeräts 108 gegeben ist.

Das Dokument 100 überträgt daraufhin die von dem Lesegerät 108 angeforderten Daten 127 des Speichers 126 von der Schnittstelle 124 zu der Schnittstelle 132. Diese Daten können von dem Steuerungsprogramm 136 an das Anwendungsprogramm 140 für eine Weiterverarbeitung übertragen werden. Beispielsweise werden die Daten auf einer Bildschirmmaske ausgegeben.

Bevor die Daten aus dem Speicher 126 an das Lesegerät 108 übertragen werden, können weitere Überprüfungen erforderlich sein, wie z.B. nach einem EAC Verfahren. Alternativ oder zusätzlich kann auch ein kryptographisches Protokoll basierend auf einem asymmetrischen Schlüssel zum Einsatz kommen.

**Bezugszeichenliste**

| | |
|---|---|
| 1 | Reflektor |
| 2 | Polarisator |
| 3 | Substrat |
| 4 | Schicht |
| 5 | Teilelektrode |
| 5' | Teilelektrode |
| 5" | Teilelektrode |
| 5''' | Teilelektrode |
| 5'''' | Teilelektrode |
| 6 | Substrat |
| 7 | Polarisator |
| 8 | Filter |
| 8' | Filter |
| 8" | Filter |
| 8''' | Filter |
| 8'''' | Filter |
| 100 | Dokument |
| 102 | Anzeige |
| 104 | Bildelement |
| 105 | Bildelement |
| 106 | Daten |
| 107 | Information |
| 108 | Lesegerät |
| 110 | Sensor |
| 114 | Aufdruck |
| 116 | Nutzerschnittstelle |
| 122 | Treiberschaltung |
| 124 | Schnittstelle |
| 126 | Speicher |
| 127 | Daten |
| 130 | Programminstruktionen |
| 131 | Programminstruktionen |
| 132 | Schnittstelle |
| 134 | Prozessor |
| 136 | Steuerungsprogramm |
| 138 | Programminstruktionen |
| 140 | Anwendungsprogramm |
| 142 | Anzeigeelement |
| 144 | Anzeigeelement |

146 Anzeigeelement
148 Anzeigeelement
150 Anzeigeelement
152 Anzeigeelement
154 Anzeigeelement
156 Anzeigeelement
158 Leiter
160 Komponente
162 Codierungstabelle
164 Spitze
166 Spitze

**Patentansprüche**

1. Dokument mit einer integrierten Anzeigevorrichtung (102), die Bildelemente für eine farbige Wiedergabe aufweist, wobei zumindest eine erste Teilmenge der Bildelemente (104) zur Abstrahlung von Licht einer ersten spektralen Zusammensetzung zur Erzeugung einer Farbwahrnehmung ausgebildet ist, und wobei zumindest eine zweite Teilmenge der Bildelemente (105) zur Abstrahlung von Licht einer zweiten spektralen Zusammensetzung zur Erzeugung derselben Farbwahrnehmung ausgebildet ist, wobei sich die erste und die zweite Teilmenge der Bildelemente hinsichtlich zumindest einer Grundfrequenz und / oder zumindest einem spektralen Verlauf voneinander unterscheiden, wobei die Bildelemente der ersten Teilmenge jeweils zumindest durch erste, zweite und dritte Anzeigeelemente (142, 144, 146) gebildet werden, wobei die Bildelemente der zweiten Teilmenge jeweils zumindest durch vierte, fünfte und sechste Anzeigeelemente (148, 150, 152; 148, 150 154, 156) gebildet werden, und wobei zumindest eines der zumindest vierten, fünften und sechsten Anzeigeelemente zur Abstrahlung einer Strahlungskomponente einer Grundfrequenz ausgebildet ist, welche von keinem der zumindest ersten, zweiten und dritten Anzeigeelemente abstrahlbar ist.

2. Dokument nach Anspruch 1, wobei die erste spektrale Zusammensetzung durch Überlagerung von Strahlungskomponenten zumindest erster, zweiter und dritter Grundfrequenzen gebildet wird, und wobei die zweite spektrale Zusammensetzung durch Überlagerung von Strahlungskomponenten zumindest vierter, fünfter und sechster Grundfrequenzen gebildet wird, wobei zumindest eine der vierten, fünften und sechsten Grundfrequenzen mit keiner der ersten, zweiten und dritten Grundfrequenzen identisch ist.

3. Dokument nach Anspruch 1 oder 2, wobei die erste spektrale Zusammensetzung durch Überlagerung von Strahlungskomponenten zumindest erster, zweiter und dritter Grundfrequenzen und ersten, zweiten und dritten spektralen Verläufen gebildet wird, und wobei die zweite spektrale Zusammensetzung durch Überlagerung von Strahlungskomponenten zumindest vierter, fünfter und sechster Grundfrequenzen und vierten, fünften und sechsten spektralen Verläufen gebildet wird, wobei zumindest einer der vierten, fünften und sechsten spektralen Verläufe mit keinem der ersten, zweiten und dritten spektralen Verläufen identisch ist.

4. Dokument nach einem der vorhergehenden Ansprüche, wobei die zweite Teilmenge der Bildelemente zumindest vier Anzeigeelemente (148, 150, 154, 156) aufweist, wobei zumindest zwei (154, 156) der zumindest vier Anzeigeelemente nur gemeinsam ansteuerbar sind.

5. Dokument nach einem der vorhergehenden Ansprüche, wobei es sich um ein Sicherheits- oder Wertdokument handelt und/oder wobei es sich um ein elektronisches Kennzeichen, insbesondere ein elektronisches Kraftfahrzeugkennzeichen handelt.

6. Dokument nach einem der vorhergehenden Ansprüche, mit einem Speicherbereich zur Speicherung von Daten (127) zur Wiedergabe durch die Bildelemente der Anzeigevorrichtung, wobei es sich bei den Daten (106) um ein Kennzeichen eines Fahrzeugs handelt.

7. Dokument nach einem der vorhergehenden Ansprüche, wobei es sich um ein elektronisches Kraftfahrzeugkennzeichen handelt.

8. Lesegerät für ein Dokument nach einem der vorhergehenden Ansprüche, mit einem Sensor (102) für die Erfassung des von der Anzeigevorrichtung abgestrahlten Lichts, und mit Auswertungsmitteln (136), zur Feststellung, ob das Licht die erste oder die zweite spektrale Zusammensetzung aufweist.

9. Lesegerät nach Anspruch 8, mit Mitteln (136, 116) zur Verifikation des Dokuments mit Hilfe der von der Anzeigevorrichtung erfassten Informationen.

10. Lesegerät nach Anspruch 8 oder 9, mit Mitteln (138) zur Ausführung eines kryptographischen Protokolls und einer Schnittstelle (132) zur Kommunikation mit dem Dokument, wobei ein Zugriff auf die Daten (127) des Dokuments voraussetzt, dass das kryptographische Protokoll mit Hilfe der Informationen erfolgreich durchgeführt worden ist.

11. Verfahren zur Verifikation eines Dokuments (100) nach einem der Ansprüche 1 bis 7, mit folgenden Schritten:

   - Sensierung des von der Anzeigevorrichtung abgestrahlten Lichts zur Prüfung, ob das Licht die erste oder die zweite spektrale Zusammensetzung aufweist, wobei durch die Auswahl der ersten oder zweiten spektralen Zusammensetzung eine Information codiert ist,
- Decodierung der Information,
- Vergleich der Information mit einer Referenz-Information.

**Claims**

1. A document having an integrated display device (102) comprising picture elements for a coloured rendition, wherein at least one first subset of the picture elements (104) is configured for the emission of light of a first spectral composition for generating a colour perception, and wherein at least one second subset of the picture elements (105) is configured for the emission of light of a second spectral composition for generating the same colour perception, wherein the first and the second subsets of the picture elements differ from one another in respect of at least one fundamental frequency and/or at least one spectral profile, wherein the picture elements of the first subset are each formed at least by first, second and third display elements (142, 144, 146), wherein the picture elements of the second subset are each formed at least by fourth, fifth and sixth display elements (148, 150, 152; 148, 150, 154, 156), and wherein at least one of the at least fourth, fifth and sixth display elements is configured for the emission of a radiation component of a fundamental frequency which cannot be irradiated by any of the at least first, second and third display elements.

2. The document according to claim 1, wherein the first spectral composition is formed by superimposition of radiation components of at least first, second and third fundamental frequencies, and wherein the second spectral composition is formed by superimposition of radiation components of at least fourth, fifth and sixth fundamental frequencies, wherein at least one of the fourth, fifth and sixth fundamental frequencies is not identical to any of the first, second and third fundamental frequencies.

3. The document according to claim 1 or 2, wherein the first spectral composition is formed by superimposition of radiation components of at least first, second and third fundamental frequencies and first, second and third spectral profiles, and wherein the second spectral composition is formed by superimposition of radiation components of at least fourth, fifth and sixth fundamental frequencies and fourth, fifth and sixth spectral profiles, wherein at least one of the fourth, fifth and sixth spectral profiles is not identical to any of the first, second and third spectral profiles.

4. The document according to any one of the preceding claims, wherein the second subset of the picture elements comprises at least four display elements (148, 150, 154, 156), wherein at least two (154, 156) of the at least four display elements are actuatable only jointly.

5. The document according to any one of the preceding claims, wherein the document is a security or value document and/or wherein the document is an identifier, in particular an electronic motor vehicle licence plate.

6. The document according to any one of the preceding claims, comprising a memory region for storing data (127) for rendition by the picture elements of the display device, wherein the data (106) relate to a licence plate of a vehicle.

7. The document according to any one of the preceding claims, wherein the document is an electronic motor vehicle licence plate.

8. A reading unit for a document according to any one of the preceding claims, comprising a sensor (102) for capturing the light radiated by the display device, and comprising evaluation means (136) for determining whether the light has the first or the second spectral composition.

9. The reading unit according to claim 8, comprising means (136, 116) for verifying the document with the aid of the information captured by the display device.

10. The reading unit according to claim 8 or 9, comprising means (138) for executing a cryptographic protocol, and comprising an interface (132) for communication with the document, wherein access to the data (127) of the document presupposes that the cryptographic protocol has been executed successfully with the aid of the information.

11. A method for verifying a document (100) according to one of claims 1 to 7, the method having the following steps:

- sensing the light irradiated by the display device to check whether the light has the first or the second spectral composition, wherein information is coded by the selection of the first or second spectral composition,
- decoding the information,
- comparing the information with reference information.

**Revendications**

1. Document avec un dispositif d'affichage (102) intégré qui présente des éléments d'image pour une reproduction en couleurs, dans lequel au moins un premier sous-ensemble des éléments d'image (104) est conçu pour l'émission de lumière d'une première composition spectrale permettant la création d'une perception de couleurs, et dans lequel au moins un deuxième sous-ensemble des éléments d'image (105) est conçu pour l'émission de lumière d'une deuxième composition spectrale permettant la création de la même perception de couleurs, dans lequel le premier et le deuxième sous-ensemble des éléments d'image se différentient l'un de l'autre en ce qui concerne au moins une fréquence de base et/ou au moins un profil spectral, dans lequel les éléments d'image du premier sous-ensemble sont formés respectivement par au moins des premiers, des deuxièmes et des troisièmes éléments d'affichage (142, 144, 146), dans lequel les éléments d'image du deuxième sous-ensemble sont formés respectivement par au moins des quatrièmes, des cinquièmes et des sixièmes éléments d'affichage (148, 150, 152 ; 148, 150 154, 156), et dans lequel au moins un des au moins quatrièmes, cinquièmes et sixièmes éléments d'affichage est conçu pour l'émission d'une composante du rayonnement d'une fréquence de base, laquelle ne peut être émise par aucun des au moins premiers, deuxièmes et troisièmes éléments d'affichage.

2. Document selon la revendication 1, dans lequel la première composition spectrale est formée par la superposition de composantes de rayonnement des au moins premières, deuxièmes et troisièmes fréquences de base, et dans lequel la deuxième composition spectrale est formée par la superposition des au moins quatrièmes, cinquièmes et sixièmes fréquences de base, dans lequel au moins une des quatrièmes, cinquièmes et sixièmes fréquences de base n'est identique avec aucune des premières, deuxièmes et troisièmes fréquences de base.

3. Document selon la revendication 1 ou la revendication 2, dans lequel la première composition spectrale est formée par la superposition de composantes de rayonnement au moins des premières, deuxièmes et troisièmes fréquences de base et des premiers, deuxièmes et troisièmes profils spectraux, et dans lequel la deuxième composition spectrale est formée par la superposition de composantes de rayonnement au moins des quatrièmes, cinquièmes et sixièmes fréquences de base et des quatrièmes, cinquièmes et sixièmes profils spectraux, dans lequel au moins un des quatrièmes, cinquièmes ou sixièmes profils spectraux n'est identique avec aucun des premiers, deuxièmes et troisièmes profils spectraux.

4. Document selon l'une des revendications précédentes, dans lequel le deuxième sous-ensemble des éléments d'image présente au moins quatre éléments d'affichage (148, 150, 154, 156), dans lequel au moins deux (154, 156) des au moins quatre éléments d'affichage ne peuvent être invoqués qu'en commun.

5. Document selon l'une des revendications précédentes, dans lequel il s'agit d'un document de sécurité ou de valeur, et/ou dans lequel il s'agit d'un système d'identification électronique, en particulier d'une plaque d'immatriculation de véhicule électronique.

6. Document selon l'une des revendications précédentes, avec une zone de mémoire permettant l'enregistrement de données (127) pour la reproduction par les éléments d'image du dispositif d'affichage, dans lequel, dans le cas des données (106), il s'agit d'une immatriculation d'un véhicule.

7. Document selon l'une des revendications précédentes, dans lequel il s'agit d'une plaque d'immatriculation de véhicule électronique.

8. Lecteur destiné à un document selon l'une des revendications précédentes, avec un capteur (102) pour la détection de la lumière émise par le dispositif d'affichage, et avec des moyens d'exploitation (136), pour permettre le constat que la lumière présente la première ou la deuxième composition spectrale.

9. Lecteur selon la revendication 8, avec des moyens (136, 116) permettant la vérification du document à l'aide des informations détectées par le dispositif d'affichage.

10. Lecteur selon la revendication 8 ou la revendication 9, avec des moyens (138) permettant l'exécution d'un protocole cryptographique et une interface (132) permettant la communication avec le document, dans lequel un accès aux données (127) du document est conditionné au fait que le protocole cryptographique ait été exécuté avec succès à l'aide des informations.

11. Procédé de vérification d'un document (100) selon l'une des revendications 1 à 7, avec les étapes suivantes :

    - la détection de la lumière émise par le dispositif d'affichage permettant la vérification si la lumière présente la première ou la deuxième composition spectrale, dans lequel une information est codée par la sélection de la première ou de la deuxième composition spectrale,
    - le décodage de l'information,
    - la comparaison de l'information avec une in-

formation de référence.

EP 3 581 396 B1

**Fig. 1**

**Fig. 2**

**Fig. 3**

**Fig. 4**

EP 3 581 396 B1

142 144 104 146  148 105 150 154 156  102

158

**Fig. 5**

Intensität

B  G'  Y  R    W

400        600        800nm  Wellenlänge

**Fig. 6**

19

**Fig. 7**

**Fig. 8**

**Fig. 9**

**Fig. 10**

EP 3 581 396 B1

**Fig. 11**

EP 3 581 396 B1

| Lesegerät | | | |
|---|---|---|---|
| Prozessor — 134 | | 116 — Nutzer-Schnittstelle | — 108 |
| Steuerungsprogramm — 136 | | | |
| Kryptographisches Protokoll — 138 | | Anwendungsprogramm — 140 | |
| Schnittstelle — 132 | | Sensor — 110 | |

| Dokument | | | |
|---|---|---|---|
| Schnittstelle — 124 | | Anzeige — 102 | |
| Chip Speicher — 126 | | Treiberschaltung — 122 | |
| 104 — Daten — 127 | | | — 100 |
| Bilddaten — 106 | | | |
| Information — 107 | | | |
| Prozessor — 128 | | | |
| Steuerungsprogramm — 131 | | | |
| Kryptographisches Protokoll — 130 | | | |

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005025806
- DE 20100158 U1
- DE 102004008841 A1
- DE 102005030626 A1
- DE 102005030627 A1
- DE 102005030628 A1
- WO 2004080100 A1
- EP 1023692 B1
- DE 10215398 B4
- EP 1173825 B1
- EP 1230617 B1
- EP 1303835 B1
- EP 1537528 B1
- WO 03030096 A1

- EP 0920675 B1
- US 6019284 A
- US 6402039 B1
- WO 9938117 A
- DE 102005O25806
- DE 102006031422053
- WO 2007137555 A2
- US 5657008 A
- US 20070285361 A1
- US 20060115110 A1
- US 20060152524 A1
- US 20070008084 A1
- US 20060250535 A1
- WO 2007054944 A

**In der Beschreibung aufgeführte Nicht-Patentliteratur**

- Basic Access Control. Machine Readable Travel Document'', Technical Report, PKI for Machine Readable Travel Documents Offering ICC Read-Only Access, Version 1.1. International Civil Aviation Organisation (ICAO), 01. Oktober 2004